# EUROPEAN PATENT SPECIFICATION

(11) **EP 4 014 791 B1**
(45) Date of publication and mention of the grant of the patent: **22.05.2024**
(21) Application number: 21215704.4
(22) Date of filing: 17.12.2021
(51) Int. Cl.: A47B 87/02, A47F 3/14, A47F 5/10, B65D 21/02

(54) **DISPLAY TRAY, STACK OF DISPLAY TRAYS AND METHOD THEREFOR**
PRÄSENTATIONSSCHALE, STAPEL VON PRÄSENTATIONSSCHALEN UND VERFAHREN DAFÜR
PLATEAU DE PRÉSENTATION, EMPILAGE DE PLATEAUX DE PRÉSENTATION ET PROCÉDÉ ASSOCIÉ

(30) Priority: 18.12.2020 NL 2027171; 04.05.2021 NL 2028143
(43) Date of publication of application: 22.06.2022
(73) Proprietor: HB RTS Holding B.V., 3542 CB Utrecht (NL)
(72) Inventor: Schepers, Klaas, 7841 GG Sleen (NL)
(74) Representative: van Breda, Jacobus

(56) References cited:
- EP-A1- 2 210 481
- WO-A1-2020/011158
- US-A- 3 499 398

## Description

The present invention relates to a display tray, a stack of display trays, and a method for setting up a display.

Display trays are known in practice. One example of known display trays is disclosed in NL 2017786 B1. In NL 2017786 B1 a display tray is disclosed wherein the support is locked in both the extended and collapsed state when a support of a second identical display is inserted in the accommodation of the display tray near the hinged end of the support. The support is fixed in either a horizontal and vertical position.

WO 2020/011158 A1 relates to a pallet box comprises a base, multiple support legs, and a box body. The bottom of each support leg can be detachably connected to the base, and the support leg can switch between a folded state relative to the base and a vertical state relative to the base.

US 3 499 398 A relates to a portable storage rack or pallet having a platform with foldable end frames hingedly connected thereto, movable between upright and folded positions.

EP 2 210 481 A1 relates to a stackable crate, constituted by a perimetric frame that has, in a lower region and at the corners, fixed legs of limited height. The frame further has, in a lower region and proximate to the corners, first seats for the rotary and removable interconnection of feet of a chosen height.

It is an object for the present invention to improve the display tray from NL 2017786 B1. In particular, it is an object of the present invention to enable an improved usage of the display tray.

The object is achieved by a display tray according to the invention, wherein the display tray comprises:
a carrier floor configured for placing goods thereon, and comprising an accommodation that extends in a direction substantially perpendicular to the carrier floor and having an accommodation opening;
a support having a hinged end and a free end, wherein the support is hingedly connected to the carrier floor with a hinge having a hinge axis and wherein the first support is capable of moving between an extended state, wherein the first support extends substantially perpendicular to the carrier floor, and a collapsed state, wherein the first support extends substantially along the carrier floor, and wherein the first support has an abutment at its free end, wherein the accommodation is configured for receiving an abutment of a second support of an identical second display tray such that the first support is locked; and
a hinge lock configured for locking the first support in a rotation-locked state and unlocking the first support in a rotation-free state, wherein the hinge lock comprises a hinge lock element and a hinge lock recess, wherein in the rotation-locked state the hinge lock element is positioned at a first position of the hinge lock recess such that the position of the first support is locked, and wherein in the rotation-free state the hinge lock element is positioned at a second position of the hinge lock recess such that the first support is free to rotate between the extended and collapsed states.

An advantage of the hinge lock element that can be positioned at the first position and the second position is that the first support can be rotated from the collapsed state to the extended state and vice versa when an abutment of a second support of a second display tray is placed at the hinged end of the support. In this way an upper display tray of a stack of display trays does not need to be removed from a stack of display trays for rotating the first support. This achieves a more versatile display tray.

The first support is preferably locked in both the extended and collapsed state.

The rotation-locked state is defined as the state wherein the first support is unable to move from the collapsed state to the extended state and from the extended state to the collapsed state. Additionally or alternatively, the rotation-locked state can be defined as the state wherein the hinge lock element is locked from rotating. The rotation-locked state is achieved by the hinge lock element being in the first position in the hinge recess which brings the hinged end of the first support in contact with the abutment of a second display tray when the second support of the second display tray is provided in the accommodation. Due to the contact between the hinged of the first support and the abutment of a second display tray, the first support is blocked from rotating.

The rotation-free state is defined as the state wherein the first support is able to move from the collapsed state to the extended state and from the extended state to the collapsed state. Additionally or alternatively, the rotation-free state can be defined as the state wherein the hinge lock element is free to rotate. The rotation-free state is achieved by the hinge lock element being in the second position in the hinge recess which brings the hinged end of the first support free from contact with the abutment of a second display tray when the first support of the second display tray is provided in the accommodation.

The second display tray preferably comprises a support wherein the free end and hinged end thereof are similarly, or more preferably identically, shaped as the respective free end and hinged end of the first display tray. In an embodiment of the invention, the second display tray is identical to the first display tray. In another embodiment, the only difference between the first and the second display tray is that a length of the support of the second display tray is longer.

Preferably, the first and second position of the hinge lock element is such that in rest the hinge lock element is positioned in the first position and the first support is locked. Via an operation of a user or a machine the hinge lock element may be brought over a distance to the second position for unlocking rotation of the first support. In a preferred embodiment according to the invention the first position is positioned closer to the carrier floor than the second position. In this way gravity will assure that in rest the hinge lock element is in its first position. The hinge lock element can be embodied as a shaft, pen, or any other suitable element that is capable of being moved in the hinge lock recess. The hinge lock element can either be attached to the first support or the carrier floor.

The accommodation is the space or room wherein the abutment of the second support can be inserted. This accommodation is defined or formed by an insertion opening that is provided in the carrier floor, the hinged end of the first support and a side wall of the carrier floor. Due to the accommodation the abutment of a second support can be received. The hinged end of the first support preferably comprises a support recess that partly defines the accommodation, and wherein the abutment of a second support of a second display tray can be received. The support recess is shaped such that when the abutment of a second display tray is received in the support recess and the hinge lock element is in its first position, rotation of the first support around its rotation axis is blocked by the abutment of the second support of the second display tray.

Preferably, the hinge axis is the rotation axis of the first support.

In an embodiment according to the invention the hinge lock element is co-axial with the hinge axis of the first support and the hinge lock element further is movably provided over a distance in the hinge lock recess between the first and second positions.

The hinge lock element preferably extends in a width direction of the carrier floor. Due to the hinge lock element being co-axial with the hinge axis an easy rotation motion of the first support is obtained. The hinge lock element being movably provided over a distance in the hinge lock recess makes sure that the hinge lock element can be moved between the first position and second position.

Preferably, the hinge lock recess comprises a chamber wherein the hinge lock element is movably provided.

In an embodiment according to the invention the hinge lock recess is provided in the carrier floor, and the first support comprises the hinge lock element.

Due to the co-acting of the hinge lock recess and the hinge lock element that is provided in the hinge lock recess, a reliable hinge-connection is realized for the carrier floor with the first support. In this embodiment the hinge lock recess comprises a first position and a second position. Preferably, the first position is positioned at a lower end of the hinge lock recess and a second position is positioned at a higher end of the hinge lock recess. In this way, in rest due to gravity the hinge lock element is in a first position and the first support is in a rotation-locked state, while it is possible to lift the first support such that the hinge lock element is in a second position and the first support is in a rotation-free state. This achieves an easy handling of the first support between the rotation-locked state and the rotation-free state. Optionally, the hinge lock element is provided in an integrated manner with support. The advantage thereof is that a more stable first support is obtained, which increases the durability of the display tray.

In an embodiment according to the invention the carrier floor comprises a ridge for supporting the hinged end of the support in the extended state.

An advantage of the ridge is that even when an abutment of a support of a second display tray is not placed at the hinged end of the first support, the first support is still able to stand upright reliably.

In an embodiment according to the invention the ridge and the hinged end of the first support are complementary shaped.

Due to the complementary shape the first support is effectively supported by the ridge.

In an embodiment according to the invention the first support comprises grooves configured for holding sheet material, for example advertisement carton.

The grooves are preferably positioned such that the grooves face each other. In this way sheet material, such as advertisement carton, can easily be inserted into the grooves and reliably hold the sheet material. The grooves can be positioned either on the outside or inside of the supports.

In an embodiment according to the invention the grooves have a width of 1 - 6 mm, preferably 2-4 mm, and most preferably have a width of about 3 mm.

The abovementioned dimensions assure that a piece of sheet material can effectively be hold by the grooves. In this way the sheet material provided in the grooves can for example be used to advertise the goods placed on the carrier floor or to show the price of the goods to the public.

In an embodiment according to the invention the carrier floor comprises one or more drains for releasing water provided on the carrier floor.

The one or more drains can for example be draining holes positioned in the carrier floor. An advantage of the draining holes is that after cleaning of the display trays water provided on the carrier floor will automatically be drained therefrom. In this way the amount of drying needed after cleaning the display tray is greatly reduced. In addition, the drains prevent liquid being collected on the carrier floor. This helps in maintaining product quality of the goods that are stacked on the carrier floor.

In an embodiment according to the invention the first support further comprises an engagement element that allows for a machine to engage the first support by inserting an engagement member to move the first support from its collapsed state to its extended state.

The engagement element can for example be embodied as a hole, opening or recess or any other suitable element. An advantage of the engagement element is that supports can be moved in an automated manner from a collapsed state to an extended state or vice versa by a machine.

In an embodiment according to the invention the carrier floor has a rectangular shape, wherein four supports are positioned at each corner, wherein an axis of rotation of the supports extends in a width direction of the carrier floor.

Each of the four first supports is preferably positioned at a respective corner. It is clear for the skilled person that a different number of first supports can be provided. These first supports can also be provided at different positions than its corners, for example in the middle of one of the sides of the carrier floor.

In an embodiment according to the invention pairs of first supports are positioned at a side extending in the width direction and are connected to each other in a direction of the axis of rotation.

Due to the connection of the pairs of first supports, the first supports provide additional stability.

In an embodiment according to the invention the accommodation and the abutment of the free end are complementary shaped.

Due to the complementary shape of the accommodation and the abutment of the free end the support achieves its locking function when an abutment of a second display tray is inserted in its hinged end.

The invention further relates to a display comprising a stack of display trays according to any one of the foregoing embodiments.

The stack of display tray has similar effects and advantages as disclosed for the display tray.

In an embodiment according to the invention the display further comprises a deck. The deck comprises a bottom side and a top side. The bottom preferably comprises accommodations that are complementary shaped with the abutments of the supports of the display tray. In this way the supports can be inserted in the accommodations of the deck when the supports are standing upright. An advantage of the deck is that the uppermost display tray in a stack of display tray can be provided with an aesthetic ceiling or cover.

Another advantage of the deck is that the display tray can be used as a transport box. In this embodiment the display comprises a display tray, sheet material arranged in the grooves, and a deck placed on top of the supports of the display tray, thereby obtaining a display box. An inner space between the carrier floor, the sheet material and the deck can then for example be used to transport goods therein.

In an embodiment according to the invention the deck comprises protrusions for inserting in the accommodation opening of a display tray, wherein the protrusions are (substantially) to the abutments of the display trays.

Preferably, the protrusions are provided on the top side of the deck. Due to the protrusions being identical to the abutments of the display trays a lowest display tray can be effectively secured on the top side of the deck by inserting the protrusions of the deck in the accommodations of the lowest display tray. In this way an effective display is obtained. Preferably, the bottom side of the deck is adapted, for example by a ridge, to be fitted in or to a box. This ensures that a display can be positioned securely on top of the box.

The invention further relates to a method for setting up a display, comprising:
- providing a first and a second display tray according to any of the foregoing embodiments;
- moving the first supports of the first display tray into its extended state; and
- arranging the second display tray above the first display tray such that the free end of the support of the first display tray abuts in the accommodation of the second display tray.

The method has similar effects and advantages as disclosed for the display tray. It is clear to the skilled person that in the method according to the invention more than one first support could be in its extended state when the second display tray is arranged above the first display tray.

Further advantages, features and details are elucidated on the basis of preferred embodiments thereof, wherein reference is made to the accompanying drawings, wherein:
- figure 1 shows a perspective view of an example of a display tray according to the invention;
- figure 2 shows another perspective view of an example of a display tray according to the invention;
- figure 3 shows a perspective view of an example of a stack of display trays according to the invention;
- figures 4A-B show a detailed view of the carrier floor and a support in the extended state;
- figures 5A-B show a detailed view of the carrier floor and a support in the collapsed state;
- figures 6A-B show a perspective view of the carrier floor and support in the extended state;
- figure 7 shows a detailed view of an example of a stack of displays;
- figure 8 shows a perspective view of a support; and
- figure 9 shows an example of a stack of display trays according to the invention;
- figure 10, shows a second example of a stack of display trays according to the invention;
- figure 11, shows a third example of a stack of display trays according to the invention.

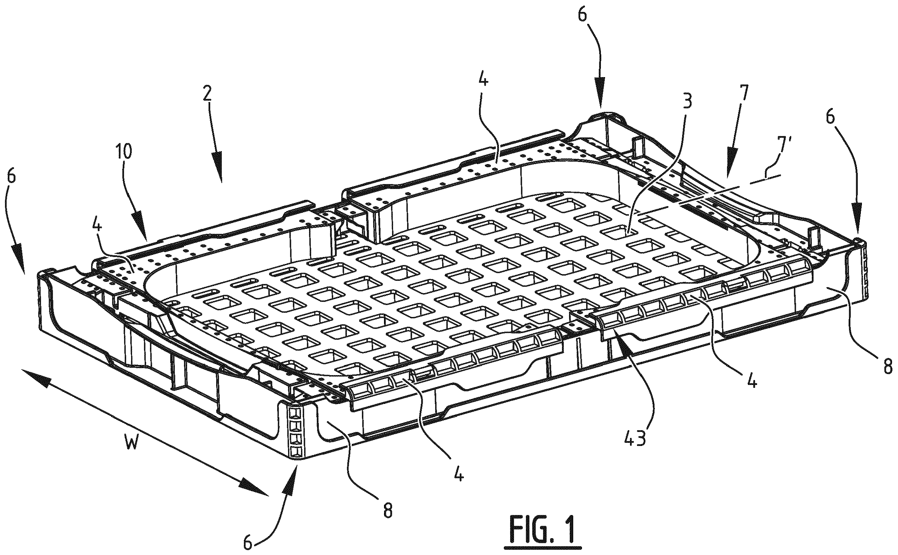

Display tray 2 (figures 1-3) comprises carrier floor 3, which in this embodiment has a rectangular shaped flat surface. At each corner 6 of carrier floor 3 there is provided support 4. Support 4 is hingedly attached to floor 3. Supports 4 are configured to rotate around hinge axis or rotation axis 8, wherein rotation axis 8 substantially extends in a width W direction.

In the illustrated embodiment sides 7 are curved such that their heights along line 7 correspond to the height of (collapsed) support 4 to improve strength and stability of display 2. It is clear for the skilled person that sides 7 could also be straight.

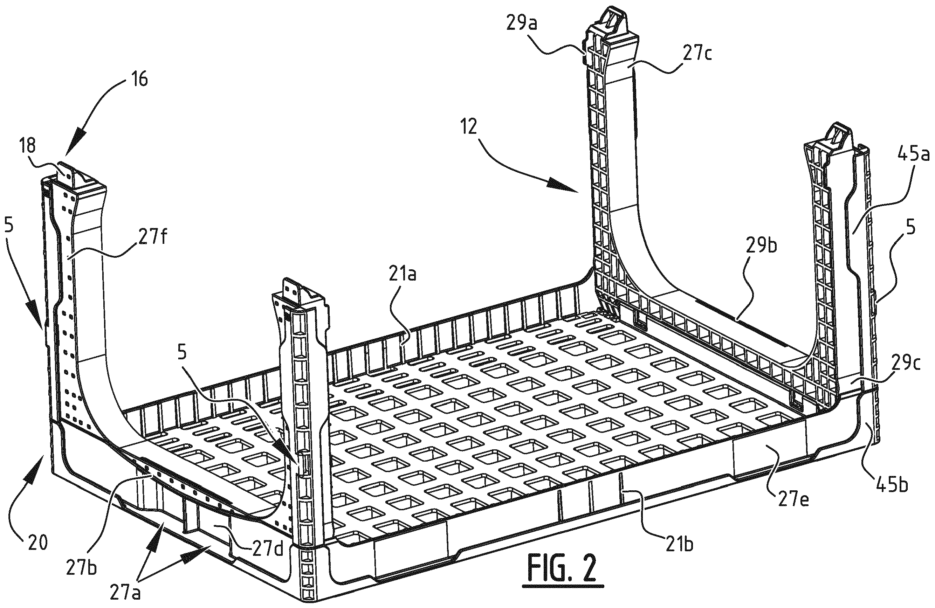

Support 4 can be in collapsed state 10 (figure 1), wherein support extends substantially along carrier floor 3 or in extended state 12 (figure 2), wherein support 4 extends substantially perpendicular to carrier floor 3. Each support 4 comprises free end 16 with abutment 18, and hinged end 20. Hinged end 20 of support 4 is hingedly connected to carrier floor 3. Further provided on each support 4 is engagement element 5, in this embodiment embodied as a hole. Engagement element 5 is configured to receive an engagement member, for example a pen or gripper of a machine, to enable movement of supports 4 in an automated manner from collapsed state 10 to extended state 12 or vice versa. Preferably, inner enforcement ribs 21a are provided in display 2 and/or outer enforcement ribs 21b are provided to allow for the use of straps. Additionally, grip 27a is provided. Display 2 preferably has curved sides 27b to improve its stability and strength. Similarly, support 4 can be provided with curved transition part 27c. Labelling and logo positions 27d,e are provided.

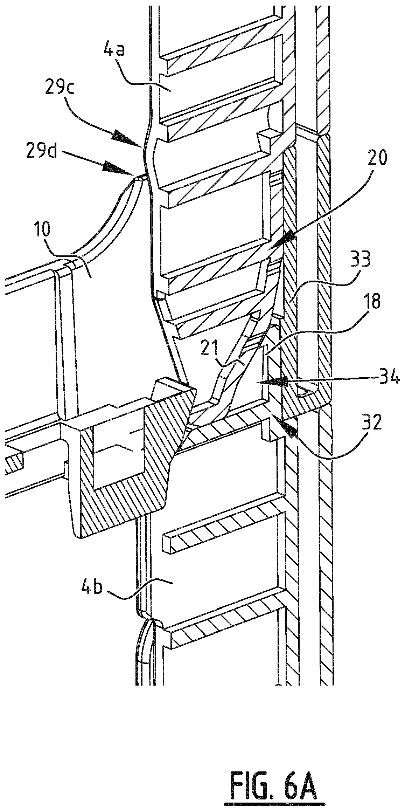

In the illustrated embodiment support 4 is provided with dewatering holes 27f. Support edge 29a engages an opening in carrier floor 3 in a collapsed state and thus provides additional strength that is useful when strapping display(s) 2, for example. Engagement rib 29b makes it easier to move support 4 as it is configured to be gripped by the thumb and/or palm of the hand of a user. Wave 29c provides additional support and pushes (optional) sheet material outwards over chamfered side 29d (figure 6A) of display 2.

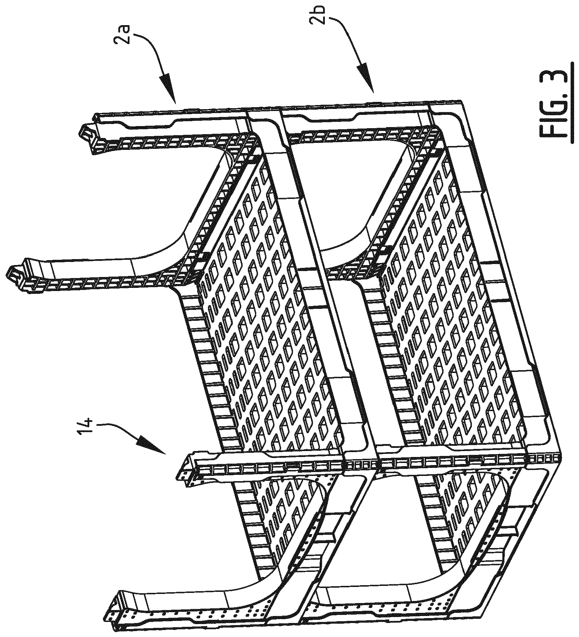

Stack of display trays 14 (figure 3) is provided by placing display tray 2a on top of display tray 2b, while supports 4 of display tray 2b are in extended state 12.

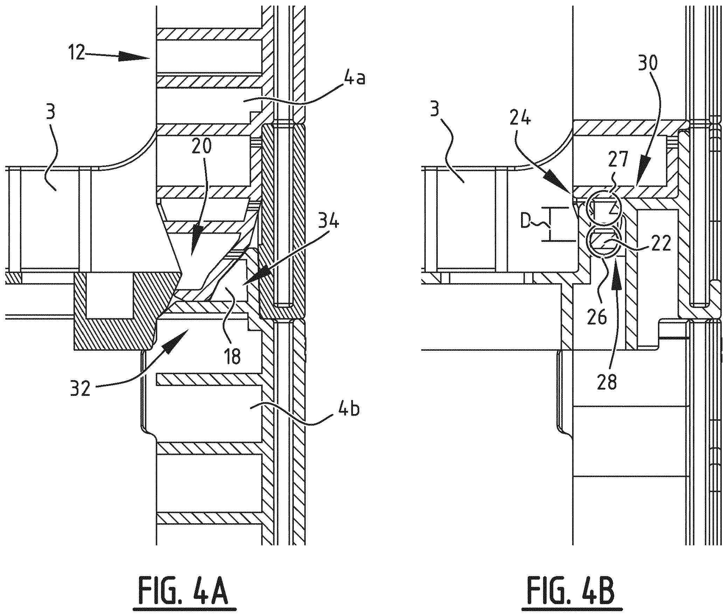

In stack of trays 14, abutment 18 (figures 4A-B) of support 4 of tray 2b extends through insertion opening 32 into accommodation 34 of tray 2a. Accommodation 34 is preferably at least partly defined by hinged end 20 of support 4a. Hinged end 20 of support 4 is furthermore preferably complementary shaped to abutment 18 of support 4b.

In the illustrated embodiment with supports 4, accommodation 34 is defined by hinged end 20 of support 4, by insertion opening 32 and by side wall 33 of carrier floor 3. In particular, accommodation 34 is partly defined by support recess 21 of hinged end of support 4. Accommodation 34 is preferably complementary shaped to abutment 18 of support 4b. In this way, abutment 18 of support 4b of a second identical display tray can effectively block rotation of support 4a. In extended state 12 support 4 is locked due to support recess 21 being in contact with abutment 18 of support 4b and blocking rotation of support 4a.

In the illustrated embodiment support 4 (figure 4b) is hingedly connected to carrier floor 3 with hinge lock element 22, that in this illustration embodied as shaft 22. Shaft 22 is co-axial with rotation axis 8 and is provided in hinge lock recess 24, that in this illustration is embodied as chamber 24, of carrier floor 3. Chamber 24 extends in a direction substantially perpendicular to carrier floor 3, such that shaft 22 can be moved upwards relative to carrier floor 3 over distance D inside chamber 24. In rest, shaft 22 is in first position 26 and support 4 is in rotation-locked state 28. Due to the extending of chamber 24 in a direction substantially perpendicular to carrier floor 3 support 4 can be moved upwards, such that shaft 22 is in second position 27 and support 4 in rotation-free state 30. In fact, in the illustrated embodiment, when moving support 4 upwards, shaft 22 will move from first position 26 to second position 27.

When abutment 18 of support 4b of lower display 2b is provided in accommodation 34 of upper display 2a, abutment 18 of support 4b effectively blocks rotation of support 4a when shaft 22 is in first position 26 and thus when support 4a is in rotation-locked state 28.

When shaft 22 is in second position 27 and support 4 in rotation-free state 30, support 4 can be brought from collapsed state 10 to extended state 12 and from extended state 12 to collapsed state 10. When support 4 is either in collapsed state 10 or extended state 12, support 4 can be moved downwards again, which brings shaft 22 back from second position 27 to first position 26. In this way, support 4 is brought to rotation-lock state 28 thus blocking support 4 in either collapsed state 10 or extended state 12.

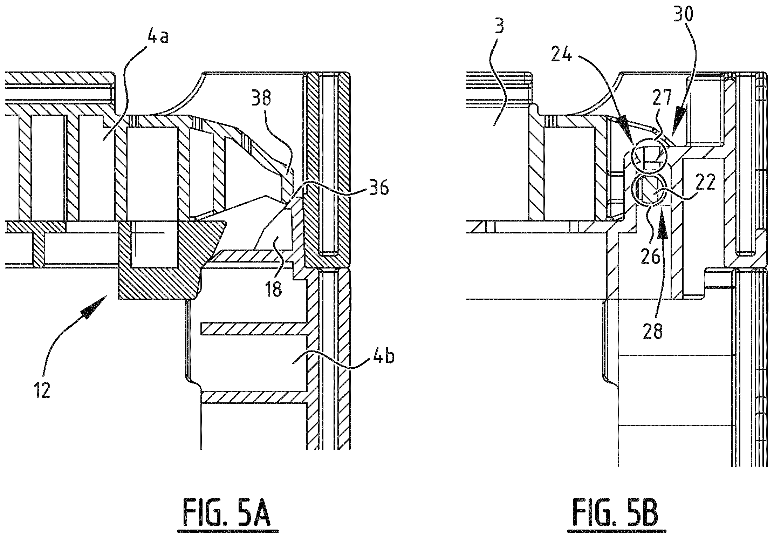

When support 4a (figure 5A-B) is in collapsed state 10, support 4a is also locked due to abutment 18 of support 4b of lower display 2b. This is achieved by cam 36 whereon outer end 38 of support 4a rests. Due to rotation-locked state 28 and rotation-free state 30 it is possible to still rotate support 4a between collapsed state 10 and extended state 12 when no display tray 2 is placed above display tray 2a. This can be achieved by lifting the support a distance upwards, such that shaft 22 moves from first position 26 to second position 27. This frees outer end 38 of cam 36. When shaft 22 is in second position 27 and outer end 38 is freed of cam 36, support is in rotation-free state 30 and able to rotate around rotation axis 8.

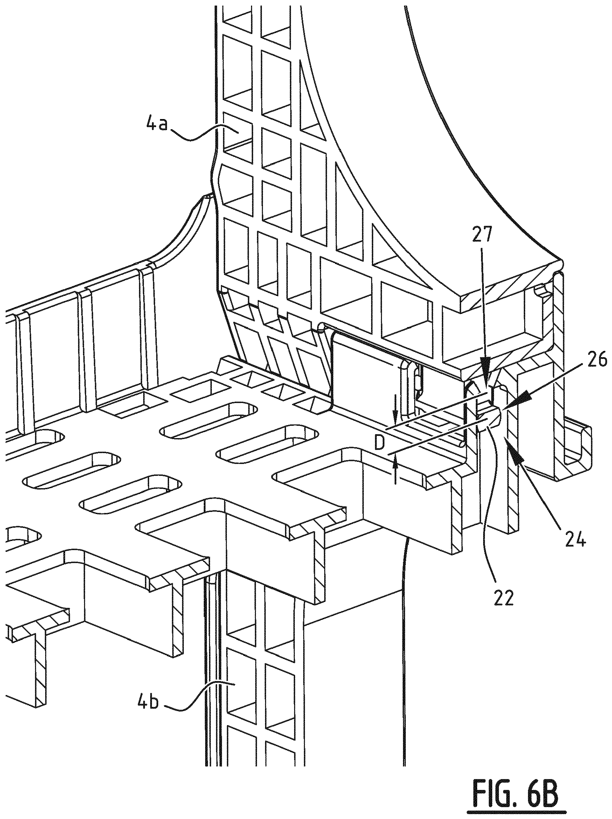

Display tray 2 (figures 6A-B) is shown in a perspective view. Shown in figure 6A is support 4a with hinged end 20 having support recess 21 that forms accommodation 34 together with side wall 33 of carrier floor 10 and opening 32. In accommodation 34 abutment 18 of support 4b is provided. The blocking of support 4a is realized by blocking the movement of support recess 21 towards abutment 18 of support 4b when support 4a is rotated around rotation axis 8. As abutment 18 is blocked from movement by side wall 33 of carrier floor 10, support recess 21 is also blocked from moving, thus effectively blocking rotation of support 4a. Further shown in figure 6B is chamber 24 wherein shaft 22 is positioned in first position 26. Shaft 22 can be brought to second position 27 over a distance D with an upwards movement of support 4a.

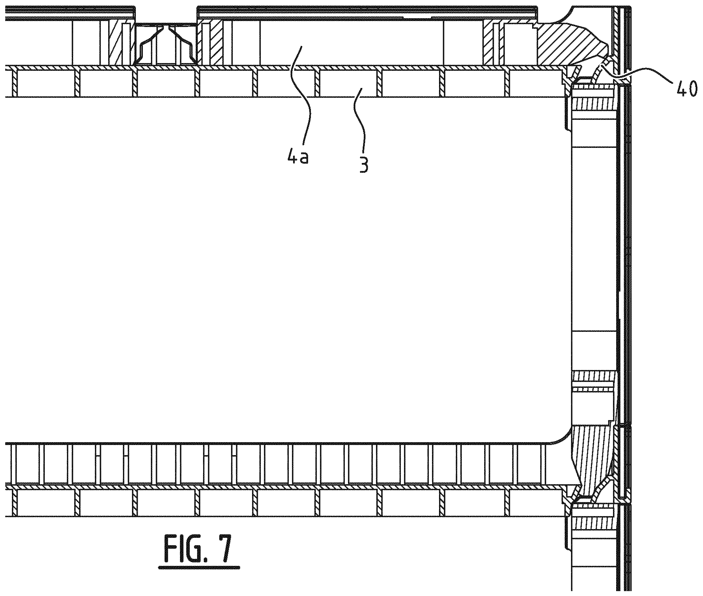

Further provided on carrier floor 3 is ridge 40 (figure 7). Ridge 40 is provided in the accommodation, and is complementary shaped with abutment 18 of support 4. This achieves that even when no abutment 18 of support 4b is provided in hinged end 20 of support 4a, support 4a is still be able to stand in an upright position.

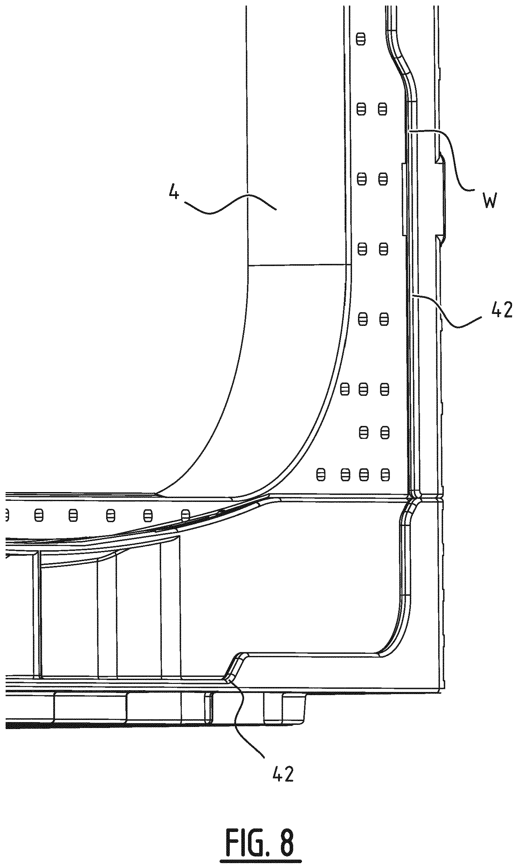

Support 4 further comprises grooves 42 (figure 8) which are configured for holding sheet material 44. In the illustrated embodiment grooves 42 are positioned on the outside of support 4. It is clear for the skilled person that grooves 42 may also be positioned on the inside of the support. In the illustrated embodiment the width W of grooves 42 is 3 millimeter, such that for example advertisement carton can be provided in supports 4. Optionally, a lip or holding sheet material 44 can be positioned over edge 43 (figure 1) of display 2. Also preferably, support 4 is provided with a broader edge part 45a (figure 2) that enables horizontally inserting (smaller sized) sheet material 44. Display 2 further comprises base edge 45b that is preferably even broader as compared to edge part 45a, and is preferably used for horizontally positioning of sheet material 44. Pocket 47 (figure 5b) can be used to place commercial advertisement and/or price tags.

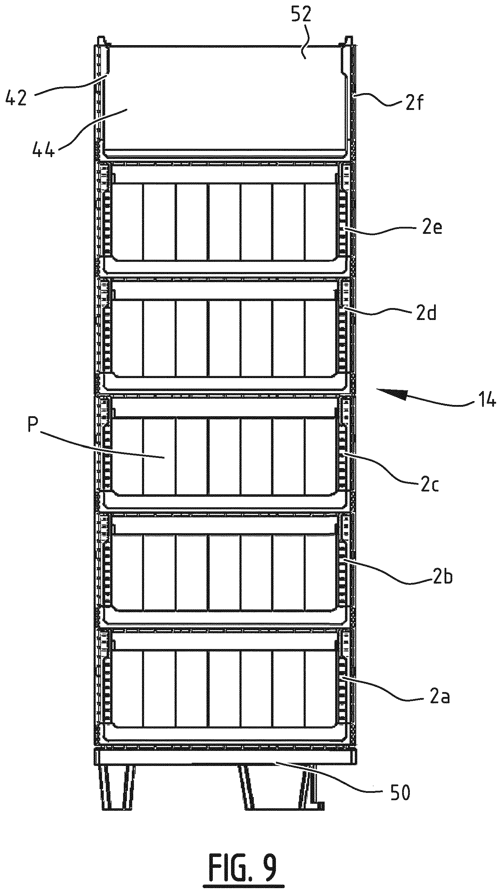

Stack of display tray 14 (figure 9) comprises 6 individual display trays 2a-f stacked onto pallet 50. On upper display tray 2f advertisement carton 44 is positioned in grooves 42. Products P are displayed on tray 2a-f of stack 14. So-called crowner 52 is placed on upper tray 2f.

In an embodiment according to the invention tray pallet 50 is provided whereon a number of display trays 2a-f are provided with supports 4 in extended state 12 for display trays 2a-e. Display trays 2a-f form stack of display trays 14. Each abutment 18 of free end 16 is provided in insertion opening 32 of accommodation 34 of the display tray provided above. As hinged end 20 and abutment 18 are complementary shaped, abutment 18 blocks rotation of the support positioned directly above. Upper display tray 2f has at first instance its supports 4 in collapsed state 10, and thus shaft 22 in first position 26. To move support 4 of display tray 2f from collapsed state 10 to extended state 12, support 4 is first lifted upwards, such that shaft 22 moves from first position 26 to second position 27 in chamber 24. This frees outer end 38 of cam 36. Then support 4 of display tray 2f can be rotation around rotation axis 8 from collapsed state 10 to extended state 12. All this can be achieved without removing abutments 18 of support 4 of display tray 2e from hinged end 20 of display tray 2e. The skilled person understands that in this way supports 4 from display tray 2f can also be moved from extended state 12 to collapsed state 10.

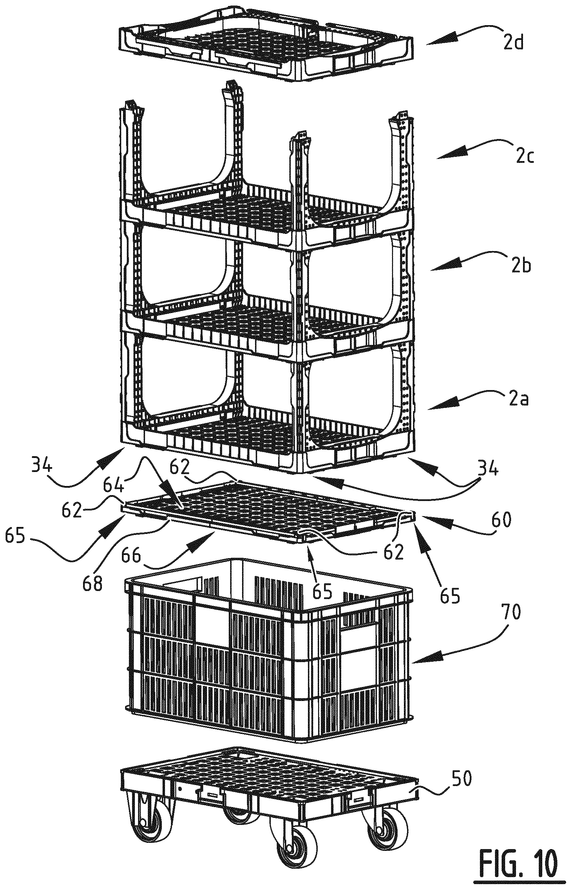

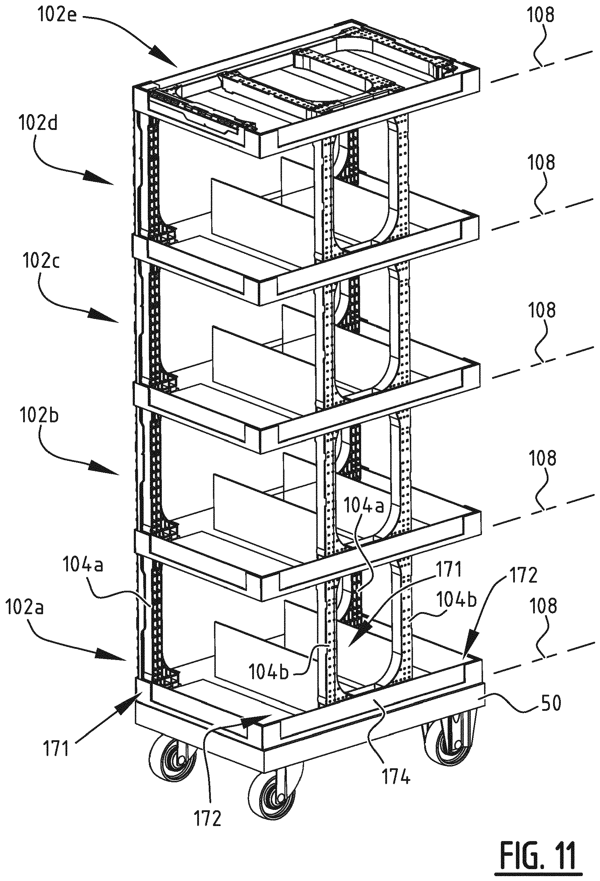

Stack of display tray 14 is (figure 10) comprises four display trays 2a-d stacked onto deck 60. Deck 60 has four protrusions 62 on upper side 64 on each corner that can be inserted in accommodations 34 of display tray 2a. Four accommodations 65 are provided on each corner of bottom side 66, such that abutments 18 can be inserted therein. Protrusions 62 are identical to abutment 18 of support 4. Bottom side 66 comprises ridge 68, such that deck 60 can effectively be placed in box 70. Box 70 is placed on tray pallet 50.Stack of display trays 114 (figure 11) comprises five display trays 102a-e stacked onto tray pallet 50. Display trays 102a-e each have two supports 104a provided at corners 171, and two supports provided 104b between corners 172 at longitudinal side 174 of display tray 102a-e. Axis of rotation 108 is in the illustrated embodiment provided in the longitudinal direction of display tray 102a-e. It is clear for the skilled person that other configurations of positions of the supports are also possible. For instance, all four supports could be positioned between the corners. Furthermore, an embodiment wherein one side only has one support is also possible.

The present invention is by no means limited to the above described preferred embodiments thereof. The rights sought are defined by the following claims within the scope of which many modifications can be envisaged.

## Claims

1. Display tray (2), comprising:
- a carrier floor (3) configured for placing goods thereon, and comprising an accommodation (34) that extends in a direction substantially perpendicular to the carrier floor (3) and having an accommodation opening;
- a first support (4a) having a hinged end (20) and a free end (16), wherein the first support (4a) is hingedly connected to the carrier floor (3) with a hinge having a hinge axis (8) and wherein the first support (4a) is capable of moving between an extended state (12), wherein the first support (4a) extends substantially perpendicular to the carrier floor (3), and a collapsed state (10), wherein the first support (4a) extends substantially along the carrier floor (3), and wherein the first support (4a) has an abutment (18) at its free end (16), wherein the accommodation (34) is configured for receiving an abutment (18) of a second support (4a) of an identical second display tray (2) such that the first support (4a) is locked; and
- a hinge lock configured for locking the first support (4a) in a rotation-locked state and unlocking the first support (4a) in a rotation-free state, wherein the hinge lock comprises a hinge lock element (22) and a hinge lock recess (24), wherein in the rotation-locked state the hinge lock element (22) is positioned at a first position (26) of the hinge lock recess (24) such that the position of the first support (4a) is locked, and wherein in the rotation-free state the hinge lock element (22) is positioned at a second position (27) of the hinge lock recess (24) such that the first support (4a) is free to rotate between the extended and collapsed states (10).

2. Display tray (2) according to claim 1, wherein the hinge lock element (22) is co-axial with the hinge axis (8) of the first support (4a) and wherein the hinge lock element (22) further is movably provided over a distance (D) in the hinge lock recess (24) between the first and second positions.

3. Display tray (2) according to claim 2, wherein the hinge lock recess (24) is provided in the carrier floor (3), and wherein the first support (4a) comprises the hinge lock element (22).

4. Display tray (2) according to claim 1, 2 or 3, wherein the carrier floor (3) comprises a ridge (40) for supporting the hinged end (20) of the first support (4a) in the extended state (12).

5. Display tray (2) according to claim 4, wherein the ridge and the hinged end (20) of the first support (4a) are complementary shaped.

6. Display tray (2) according to claim any one of the foregoing claims, wherein the first support (4a) comprises grooves (42) configured for holding sheet material.

7. Display tray (2) according to claim 6, wherein the grooves have a width of 1 - 6 mm, preferably 2-4 mm, and most preferably have a width of about 3 mm.

8. Display tray (2) according to any one of the foregoing claims, wherein the carrier floor (3) comprises one or more drains (27f) for releasing water provided on the carrier floor (3).

9. Display tray (2) according to any one of the foregoing claims, wherein the first support (4a) further comprises an engagement element (29b) that allows for a machine to engage the first support (4a) by inserting an engagement member to move the first support (4a) from its collapsed state (10) to its extended state (12).

10. Display tray (2) according to any one of the foregoing claims, wherein the carrier floor (3) has a rectangular shape, wherein four first supports (4a) are positioned at each corner (6), wherein an axis of rotation (8) of the first supports (4a) extends in a width direction of the carrier floor (3), and/or wherein the accommodation (34) and the abutment (18) of the free end (16) are complementary shaped.

11. Display tray (2) to claim 10, wherein pairs of first supports (4a) positioned at a side extending in the width direction are connected to each other in a direction of the axis of rotation (8).

12. Display comprising a stack of display trays (2) according to any one of the foregoing claims.

13. Display according to claim 12, further comprising a deck, wherein the deck preferably comprises protrusions (62) for inserting in the accommodation opening of a display tray (2), wherein the protrusions (62) are substantially identical to the abutments (18) of the display trays (2).

14. Method for setting up a display, comprising:
- providing a first display tray (2) according to any of claims 1 to 11;
- moving the first support (4a) of the first display tray (2) into its extended state (12);
- providing a second display tray (2) according to any one of claims 1 to 11; and
- arranging the second display tray (2) above the first display tray (2) such that the free end (16) of the first support (4a) of the first display tray (2) abuts in the hinged end (20) of the second display tray (2).

15. Method according to claim 14, further comprising the steps of:
- lifting the first support (4a) of the first tray over the distance in the hinge lock recess (24);
- moving the first support (4a) from the rotation-locked state to the rotation-free state; and
- rotating the first support (4a) between the collapsed state (10) and the extended state (12).

## Patentansprüche

1. Auslagefach (2), umfassend:
- einen Trägerboden (3), der so konfiguriert ist, um Waren darauf zu platzieren, und umfassend eine Aufnahme (34), die sich in einer Richtung im Wesentlichen senkrecht zum Trägerboden (3) erstreckt und eine Aufnahmeöffnung aufweist;
- eine erste Stütze (4a), die ein klappbares Ende (20) und ein freies Ende (16) aufweist, wobei die erste Stütze (4a) mit einem Scharnier, das eine Scharnierachse (8) aufweist, gelenkig mit dem Trägerboden (3) verbunden ist und wobei die erste Stütze (4a) in der Lage ist, sich zwischen einem ausgefahrenen Zustand (12), wobei sich die erste Stütze (4a) im Wesentlichen senkrecht zum Trägerboden (3) erstreckt, und einem zusammengeklappten Zustand (10) bewegen kann, wobei sich die erste Stütze (4a) im Wesentlichen entlang des Trägerbodens (3) erstreckt, und wobei die erste Stütze (4a) an ihrem freien Ende (16) einen Anschlag (18) aufweist, wobei die Aufnahme (34) so konfiguriert ist, um einen Anschlag (18) einer zweiten Stütze (4a) eines identischen zweiten Auslagefachs (2) aufzunehmen, so dass die erste Stütze (4a) verriegelt wird; und
- eine Scharnierverriegelung, die so konfiguriert ist, um die erste Stütze (4a) in einem drehverriegelten Zustand zu verriegeln und um die erste Stütze (4a) in einem drehfreien Zustand zu entriegeln, wobei die Scharnierverriegelung ein Scharnierverriegelungselement (22) und eine Scharnierverriegelungsaussparung (24) umfasst, wobei in dem drehverriegelten Zustand das Scharnierverriegelungselement (22) an einer ersten Position (26) der Scharnierverriegelungsaussparung (24) positioniert ist, so dass die Position der ersten Stütze (4a) verriegelt ist, und wobei in dem drehfreien Zustand das Scharnierverriegelungselement (22) an einer zweiten Position (27) der Scharnierverriegelungsaussparung (24) positioniert ist, so dass die erste Stütze (4a) frei ist, um zwischen dem ausgefahrenen und dem zusammengeklappten Zustand (10) zu drehen.

2. Auslagefach (2) gemäß Anspruch 1, wobei das Scharnierverriegelungselement (22) koaxial mit der Scharnierachse (8) der ersten Stütze (4a) ist und wobei das Scharnierverriegelungselement (22) ferner über eine Strecke (D) in der Scharnierverriegelungsaussparung (24) zwischen der ersten und der zweiten Position beweglich bereitgestellt ist.

3. Auslagefach (2) gemäß Anspruch 2, wobei die Scharnierverriegelungsaussparung (24) im Trägerboden (3) bereitgestellt ist, und wobei die erste Stütze (4a) das Scharnierverriegelungselement (22) umfasst.

4. Auslagefach (2) gemäß Anspruch 1, 2 oder 3, wobei der Trägerboden (3) einen Steg (40) zum Stützen des klappbaren Endes (20) der ersten Stütze (4a) im ausgefahrenen Zustand (12) umfasst.

5. Auslagefach (2) gemäß Anspruch 4, wobei der Steg und das klappbare Ende (20) der ersten Stütze (4a) komplementär geformt sind.

6. Auslagefach (2) gemäß einem der vorangehenden Ansprüche, wobei die erste Stütze (4a) Nuten (42) umfasst, die konfiguriert sind, um Schichtmaterial aufzunehmen.

7. Auslagefach (2) gemäß Anspruch 6, wobei die Nuten eine Breite von 1 - 6 mm, bevorzugt 2 - 4 mm, und am bevorzugtesten eine Breite von etwa 3 mm aufweisen.

8. Auslagefach (2) gemäß einem der vorangehenden Ansprüche, wobei der Trägerboden (3) einen oder mehrere Abläufe (27f) zum Ablassen von auf dem Trägerboden (3) vorhandenem Wasser umfasst.

9. Auslagefach (2) gemäß einem der vorstehenden Ansprüche, wobei die erste Stütze (4a) ferner ein Eingriffselement (29b) umfasst, das es einer Maschine ermöglicht, mit der ersten Stütze (4a) in Eingriff zu kommen, indem sie ein Eingriffselement einführt, um die erste Stütze (4a) aus ihrem zusammengeklappten Zustand (10) in ihren ausgefahrenen Zustand (12) zu bewegen.

10. Auslagefach (2) gemäß einem der vorhergehenden Ansprüche, wobei der Trägerboden (3) eine rechteckige Form aufweist, wobei an jeder Ecke (6) vier erste Stützen (4a) angeordnet sind, wobei eine Drehachse (8) der ersten Stützen (4a) in einer Breitenrichtung des Trägerbodens (3) verläuft, und/oder wobei die Aufnahme (34) und der Anschlag (18) des freien Endes (16) komplementär geformt sind.

11. Auslagefach (2) gemäß Anspruch 10, wobei Paare von ersten Stützen (4a), die an einer sich in Breitenrichtung erstreckenden Seite angeordnet sind, in Richtung der Drehachse (8) miteinander verbunden sind.

12. Auslage, umfassend ein Stapel von Auslagefächern (2) gemäß einem der vorangehenden Ansprüche.

13. Auslage gemäß Anspruch 12, ferner umfassend ein Deck, wobei das Deck bevorzugt Vorsprünge (62) zum Einsetzen in die Aufnahmeöffnung eines Auslagefachs (2) umfasst, wobei die Vorsprünge (62) im Wesentlichen identisch mit den Anschlägen (18) des Auslagefachs (2) sind.

14. Verfahren zum Einrichten einer Auslage, umfassend:
- Bereitstellen eines ersten Auslagefachs (2) gemäß einem der Ansprüche 1 bis 11;
- Bewegen der ersten Stütze (4a) des ersten Auslagefachs (2) in deren ausgefahrenen Zustand (12);
- Bereitstellen eines zweiten Auslagefachs (2) gemäß einem der Ansprüche 1 bis 11; und
- Anordnen des zweiten Auslagefachs (2) über dem ersten Auslagefach (2), so dass das freie Ende (16) der ersten Stütze (4a) des ersten Auslagefachs (2) in das klappbare Ende (20) des zweiten Auslagefachs (2) eingreift.

15. Verfahren gemäß Anspruch 14, ferner umfassend die Schritte:
- Anheben der ersten Stütze (4a) des ersten Fachs über den Abstand in der Scharnierverriegelungsaussparung (24);
- Bewegen der ersten Stütze (4a) aus dem drehverriegelten Zustand in den drehfreien Zustand; und
- Drehen der ersten Stütze (4a) zwischen dem zusammengeklappten Zustand (10) und dem ausgefahrenen Zustand (12).

## Revendications

1. Plateau-présentoir (2), comprenant :
- un fond-support (3) configuré pour placer des marchandises sur celui-ci, et comprenant un logement (34) qui s'étend dans une direction sensiblement perpendiculaire au fond-support (3) et présentant une ouverture de logement ;
- un premier support (4a) présentant une extrémité articulée (20) et une extrémité libre (16), dans lequel le premier support (4a) est articulé sur le fond-support (3) avec une charnière présentant un axe de charnière (8) et dans lequel le premier support (4a) est apte à se déplacer entre un état déployé (12), dans lequel le premier support (4a) s'étend sensiblement perpendiculaire au fond-support (3), et un état replié (10), dans lequel le premier support (4a) s'étend sensiblement le long du fond-support (3), et dans lequel le premier support (4a) présente une butée (18) au niveau de son extrémité libre (16), dans lequel le logement (34) est configuré pour recevoir une butée (18) d'un second support (4a) d'un second plateau-présentoir (2) identique de sorte que le premier support (4a) soit bloqué ; et
- un dispositif de blocage de charnière configuré pour bloquer le premier support (4a) dans un état de rotation bloquée et débloquer le premier support (4a) dans un état de rotation libre, dans lequel le dispositif de blocage de charnière comprend un élément de dispositif de blocage de charnière (22) et un évidement de dispositif de blocage de charnière (24), dans lequel dans l'état de rotation bloquée l'élément de dispositif de blocage de charnière (22) est positionné en une première position (26) de l'évidement de dispositif de blocage de charnière (24) de sorte que la position du premier support (4a) soit bloquée, et dans lequel dans l'état de rotation libre l'élément de dispositif de blocage de charnière (22) est positionné en une seconde position (27) de l'évidement de dispositif de blocage de charnière (24) de sorte que le premier support (4a) soit libre de tourner entre les états déployé et replié (10).

2. Plateau-présentoir (2) selon la revendication 1, dans lequel l'élément de dispositif de blocage de charnière (22) est coaxial par rapport à l'axe de charnière (8) du premier support (4a) et dans lequel l'élément de dispositif de blocage de charnière (22) est en outre disposé de manière mobile sur une distance (D) dans l'évidement de dispositif de blocage de charnière (24) entre les première et seconde positions.

3. Plateau-présentoir (2) selon la revendication 2, dans lequel l'évidement de dispositif de blocage de charnière (24) est disposé dans le fond-support (3) et dans lequel le premier support (4a) comprend l'élément de dispositif de blocage de charnière (22).

4. Plateau-présentoir (2) selon la revendication 1, 2 ou 3, dans lequel le fond-support (3) comprend une nervure (40) pour supporter l'extrémité articulée (20) du premier support (4a) dans l'état déployé (12).

5. Plateau-présentoir (2) selon la revendication 4, dans lequel la nervure et l'extrémité libre (20) du premier support (4a) sont formées de manière complémentaire.

6. Plateau-présentoir (2) selon l'une quelconque des revendications précédentes, dans lequel le premier support (4a) comprend des rainures (42) configurées pour retenir un matériau en feuille.

7. Plateau-présentoir (2) selon la revendication 6, dans lequel les rainures présentent une largeur de 1-6 mm, de préférence 2-4 mm, et de manière préférée entre toutes présentent une largeur d'environ 3 mm.

8. Plateau-présentoir (2) selon l'une quelconque des revendications précédentes, dans lequel le fond-support (3) comprend une ou plusieurs évacuations (27f) pour rejeter de l'eau disposées sur le fond-support (3).

9. Plateau-présentoir (2) selon l'une quelconque des revendications précédentes, dans lequel le premier support (4a) comprend en outre un élément de mise en prise (29b) qui permet à une machine de venir en prise avec le premier support (4a) par insertion d'un organe de mise en prise pour déplacer le premier support (4a) de son état replié (10) à son état déployé (12).

10. Plateau-présentoir (2) selon l'une quelconque des revendications précédentes, dans lequel le fond-support (3) présente une forme rectangulaire, dans lequel quatre premiers supports (4a) sont positionnés à chaque coin (6), dans lequel un axe de rotation (8) des premiers supports (4a) s'étend dans un sens de la largeur du fond-support (3), et/ou dans lequel le logement (34) et la butée (18) de l'extrémité libre (16) sont formés de manière complémentaire.

11. Plateau-présentoir (2) selon la revendication 10, dans lequel des paires de premiers supports (4a) positionnées d'un côté s'étendant dans le sens de la largeur sont reliées les unes aux autres dans une direction de l'axe de rotation (8) .

12. Présentoir comprenant une pile de plateaux-présentoirs (2) selon l'une quelconque des revendications précédentes.

13. Présentoir selon la revendication 12, comprenant en outre une plate-forme, dans lequel la plate-forme comprend de préférence des saillies (62) à insérer dans l'ouverture de logement du plateau-présentoir (2), dans lequel les saillies (62) sont sensiblement identiques aux butées (18) des plateaux-présentoirs (2).

14. Procédé d'installation d'un présentoir, comprenant :
- la fourniture d'un premier plateau-présentoir (2) selon l'une quelconque des revendications 1 à 11 ;
- le déplacement du premier support (4a) du premier plateau-présentoir (2) vers son état déployé (12) ;
- la fourniture d'un second plateau-présentoir (2) selon l'une quelconque des revendications 1 à 11 ; et
- l'agencement du second plateau-présentoir (2) au-dessus du premier plateau-présentoir (2) de sorte que l'extrémité libre (16) du premier support (4a) du premier plateau-présentoir (2) vienne en butée dans l'extrémité articulée (20) du second plateau-présentoir (2).

15. Procédé selon la revendication 14, comprenant en outre les étapes de :
- soulèvement du premier support (4a) du premier plateau sur une distance dans l'évidement de dispositif de blocage de charnière (24) ;
- déplacement du premier support (4a) de l'état de rotation bloquée à l'état de rotation libre ; et
- rotation du premier support (4a) entre l'état replié (10) et l'état déployé (12).
